# EUROPEAN PATENT APPLICATION

(11) **EP 3 874 958 A1**
(43) Date of publication of application: **08.09.2021**
(21) Application number: 21152863.3
(22) Date of filing: 22.01.2021
(51) Int. Cl.: A23C 20/00, A23C 20/02

(54) **PROCESS FOR THE PREPARATION OF A PLANT-BASED SUBSTITUTE OF CHEESE OR OTHER DAIRY PRODUCTS**

(30) Priority: 04.03.2020 IT 202000004525
(71) Applicant: Vegandelicious Srl, 00191 Roma (IT)
(72) Inventor: Martella, Sauro, 00191 Roma (IT)
(74) Representative: Leganza, Alessandro

(57) **Abstract**

The present invention concerns an efficient process for the preparation of the plant-based substitute of cheese or other diary products and related products and, particularly, for the preparation of plant-origin cheese-types characterized by the presence of mould blooming, for example, Camembert-type, allowing the rapid process completion thus avoiding the long times of preventive fermentation which are the bottleneck in the preparation of this type of plant products (conventionally based on walnut fermentation). Furthermore, the invention concerns plant-origin cheese substitutes obtainable by said process.

## Description

### Technical field

The present invention concerns an efficient process for the preparation of a plant-based substitute of cheese or other diary products and, in particular, cheese substitute characterized by the presence of mould blooming and related products. In particular, the invention relates to the production process of plant cheese-types characterized by the presence of mould bloomings, allowing to avoid the long time of fermentation conventionally used to make the product suitable to the mould flowering step and representing the bottleneck in the preparation of this type of products. Furthermore, the invention concerns plant-based substitutes of cheese or other diary products, preferably Camembert-type, obtainable by said process.

### State of the art

The conventional production of cheese-types or other diary products is carried out by using animal-origin milk as basic ingredient since ever.
In the last years, due to the diffusion of a greater ecological awareness, together with the even more widespread empathy towards animals, as well as the search of a more healthy diet, therefore animal fats-free, several plant alternatives to the classic cheese arrived on the market, also receiving customer appreciation. However, such alternatives are usually characterized by lack of organoleptic qualities, such that not being in any way comparable to traditional cheese-types, either in terms of taste, texture or spinnability, if undergoing to heat.

Some traditional cheese-types or diary products, or animal-milk based products, characterized by the presence of mould bloomings or an outer surface layer consisting of moulds (e.g., the known French cheese-type Camembert or Brie) or for the presence of mould bloomings inside them (for example, Gorgonzola, blue-veined, etc.), or with mould bloomings both on the outer surface and inside, have been available on the market for a long time.

The few available plant-origin proposals relating, for example, to Camembert-type or Camembert-like are produced using crude walnut mixtures (cashews, almonds, etc.) which are soaked into water and fermented for days or weeks. Such fermentation process of the dough implies various problems related to the long production time and accordingly excessive management costs, usually too sour taste that is not always appreciated and usually a grainy texture, and not creamy and without spinnability when undergoing to heat.

In fact, current processes for producing plant-based substitutes of cheese-types, comprise a long fermentation step, which can last from several days to many weeks, up to several months for the most extreme cases, that representing the real bottleneck in the current production of said plant-substitutes of cheese-types.

### Summary of the invention

The problem addressed by the present invention is therefore to provide a process allowing the preparation of plant-based substitute of cheese or other diary products, preferably, for preparing a cheese plant-based substitute characterized by the presence of mould blooming, without carrying out the preventive fermentation of the same.

Furthermore, the process of the invention advantageously allows the preparation of plant cheese-types or other diary products without using gluten and then allowing to obtain gluten-free cheese-types. Furthermore, the plant-cheese-types or other diary products do not contain any animal-origin ingredient.

Therefore, the present invention solves the above-mentioned problem through the process and the product as defined in the enclosed claims, whose definitions are integral part of the present description, allowing to produce plant cheese-types, preferably characterized by the presence of mould blooming, or other plant diary products, without requiring the long fermentation step and, furthermore, characterized by being spinnable when undergoing to heat, and further gluten-free, i.e. without gluten.

In fact, such invention uses simple and cheap ingredients, a preparation process which is simple and quick, therefore it is particularly advantageous in terms of cheapness, particularly for large industrial scale applications.

Another object is a plant-based substitute of cheese or other diary products, preferably characterized by the presence of mould blooming, obtainable by said process, in particular, a cheese plant-based substitute characterized by the presence of mould blooming and gluten-free or comprising from 0.001 to 20 ppm of gluten.

Further characteristics and advantages of the plant-based substitute of cheese or other diary products and the process for the preparation thereof will be illustrated by the description of embodiments of the invention, provided as an indication of the invention.

### Brief description of the figures

Figures 1 and 2 show a plant-origin cheese, Camember-type, prepared according the process of the invention.
Figure 3 shows a plant-origin diary product, ricotta-type, obtained according the process of the invention.
Figures 4 and 5 show the behavior under warm conditions both related to dissolution, and spinning of a plant-origin cheese obtained according to the process of the invention, miming the effect usually obtainable by casein.

### Detailed description of the invention

An object of the present invention is a process for the preparation of a plant-based substitute of cheese or other diary products comprising the following steps:
A) preparing in a suitable container a mixture comprising:
   - from 2% to 45% w/w of starch,
   - from 0.10% to 15% w/w of pea, soybean, rice proteins or the like,
   - from 0.10% to 1.90% w/w of kappa, iota and lambda carrageenan mixture, or similar ingredients characterized by the same technological functions;
   - from 20% to 80% w/w of plant drink obtained from the mixture of water, soybean, almond, rice, lentils or the like;
   - dal 15% al 55% w/w of coconut oil,
B) mixing until obtaining an homogeneous mixture;
C) bain-marie cooking or thermally-equivalent method at a temperature comprised between 55°C and 90°C for a time comprised between 1 minute and 15 minutes, with further tolerances proportionate to the density to be obtained, the on-cooking product amount and the evaporation surface of the cooking machine.
D) pouring the product into one or more molds or inside synthetic or plant gut casing;
E) reducing the temperature until a temperature comprised between -40°C and 10°C or until reaching the suitable temperature to carry out step F).

According to a preferred embodiment of the process of the present invention, the cheese plant-based substitute is characterized by the presence of mould blooming, and said process comprising the following further steps:
F) immerging or spraying the product wheel obtained by step E) in or with an aqueous solution comprising purified water and powder of penicillium candidum and/or Geotrichum Candidumo mould or the like and however characterizing the type of cheese to be obtained;
G) positioning the sprinkled or sprayed wheels of step F) on a grid in a ventilated environment and controlled at a minimum temperature comprised from 2°C to 10°C and maximum temperature from 10°C to 22°C and humidity from 20% to 95%;
H) turning daily or however regularly the wheels depending on the dimension and shapes and the view-result of the wheels so as to let moulds growing until a uniform mould colonization.

According to a preferred embodiment, the mixture of step A) can comprise one or more of the following further ingredients:
- from 0% to 12% w/w of maltodextrins,
- from 0.10% to 8% w/w of yeast flakes,
- from 0.05% to 8% w/w powdered onion,
- from 0.50% to 4% w/w of salts,
- from 0.1% to 1.90% w/w of citric acid,
- from 0.1% to 1.90% w/w of lactic acid,
- from 2% to 25% w/w of fruit juice,
- from 10% to 30% w/w of seed or olive oil,
- from 0.1% to 10% w/w of sunflower, flax seeds or the like.
Said further ingredients have aromatic, preservative purposes of the product or other.

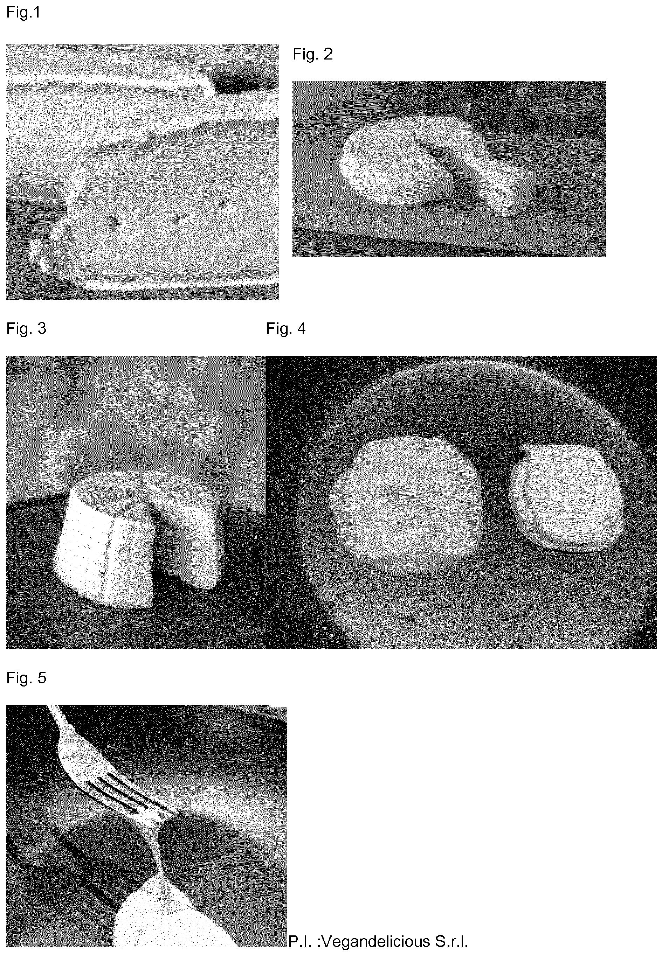

The present process allows to solve problems of plant cheese-types-like or plant-diary products-like of the prior art through both the particular mixture of ingredients used and the preparation process, allowing to obtain absolutely a granules-free, absolutely creamy plant cheese, in very short times, which is preferably aromatic and having the characteristic of being spinnable when heated, or forming strings when heated and stretch, properly as a conventional real cheese (see Fig. 4 and 5). Said characteristic distinguished the product obtainable through the process of the invention from all the known products.

Moreover and preferably, in the case of cheese-types characterized by the presence of mould blooming, the process allows to obtain products perfectly covered by the classic blooming, for example Camembert-type.

Indeed, unlike the processes of the prior art, instead of being based on a "crude" dough" firstly fermented and then flowered for a total of processing weeks/months (since moulds and ferments used are mixed in the dough which therefore could not be processed at high temperatures in order to not destroy thermolabile moulds and ferments), a dough "under warm" conditions is made, which once obtained was poured into a mold and after few hours can be subjected to the mould flowering steps (unlike the walnut -based crude dough which requires day/weeks of fermentation before passing to the flowering steps). Thereupon, in the case of plant cheese-types characterized by the presence of mould bloomings, it is sprayed with or immersed into a solution of water and selected moulds on the obtained wheels, allowing the moulds to "flower" under controlled environment, as occurs for traditional Camembert.

In the case of plant cheese-types characterized by the presence of mould bloomings, the main characterizing element is due by the fact that the product is obtained by flowering surface moulds usually used for preparing traditional Camembert (penicilliumcandidum and other similar ones), on a dough obtained through a process under warm conditions, by processing plant ingredients of the created mixtures.

Plant versions of Camembert are already commercially available, even if not distributed in Italy yet, all produced on crude-walnut doughs (cashews or almonds or other walnuts) allowed to ferment by adding ferments and moulds into the dough at room temperature or under cold conditions (otherwise, heat would cause the death of mould spores used) and that causes a production time lengthening and related costs, as well as a basically grainy, not-elastic and not spinnable dough, with a sour note typical of fermentation, that is not always appreciated.

It is important to observe that, the preparation of the dough under warm conditions according to step C) generates a very creamy and particularly spinnable product, having a more pleasant aroma, providing characteristics more similar to conventional cheese even when heat-processed (ovens, cooking plates, pans, etc.) making it more usable to amateur and professional users.

Furthermore, the use of a baked dough, allows to eliminate the period of cheese fermentation (generally from 2 weeks up to some months) allowing the surface flowering starting even within few hours with evident advantages from an economic point of view and in terms of manufacturing logistics.

Actually, the ingredients amounts of step A) and proportions can be modified to obtain doughs more aged and creamy and with many variants exactly by working on ingredients percentages, even adding aromatizations to the dough and creating more color and flavor dough lines for example walnut, red wine, tomato, smoked aromas, etc. or with consistencies of stracchino, mozzarella, gorgonzola, tomino or even aged hard cheese-types.

The process is rapid and economically advantageous due to the absence of fermentation and aging steps. Since said process involve the dough baking, the resulting product can be marketed few days after its baking, allowing the optimization of production times without any complex and expensive drying or long aging steps.

In fact, the experimentation carried out allows to confirm that the fermentation step, as well as making the process uneconomic, did not provide the hoped results when applied to the plant cheese-types, because it was too much influenced by external elements, the latter not always being manageable (mould reactions, splits within the product, acid flavor which is not always pleasant, etc.). The process of the invention solved such problem.

The cheese plant-based substitute or the plant-based substitute of other diary products, therefore refers to plant-based products which are substitutes of conventional cheese-types or other diary products, consisting of animal-origin substances, such as milk and derivatives.

The term plant-based substitute of cheese or other diary products therefore comprises cheese pant substitutes or other conventional diary products and then comprises plant cheese, plant ricotta, plant camembert, plant parmigiano, plant stracchino, plant gorgonzola, plant scamorza, plant tomino, plant ricotta and any other type diary product produced without animal-origin ingredient.

The term cheese plant-based substitute or the plant-base substitute of other diary products therefore includes plant-based products imitating in the best way possible, for example, the traditional cheese named Camembert and similar diary products and other variants such as plant ricotta, plant camembert, plant parmigiano, plant stracchino, plant gorgonzola, plant scamorza, plant tomino, plant ricotta and any other type of diary product made without animal-origin ingredients.

The term cheese plant-based substitute can be abbreviated with the term plant-based cheese or plant cheese, and the term plant-based substitute of other diary products can be abbreviated by the term plant-based diary product or plant diary product.

Diary products means plant based-substitutes of similar traditional diary products such as plant ricotta, plant camembert, plant parmigiano, plant stracchino, plant gorgonzola, plant scamorza, plant tomino, plant ricotta and any other type of diary product made without animal-origin ingredients.

According to a preferred embodiment, the cheese plant-based substitute is characterized by the presence of mould blooming, edible moulds.

According to a preferred embodiment, the cheese plant-based substitute is characterized by the presence of mould blooming, on the outer sup. and/or inside.

According to a preferred embodiment, the cheese plant-based substitute characterized by the presence of mould blooming is of Camembert-type or Brie-type.

The main used ingredients are selected from: starch, among which tapioca starch, wheat starch, potato starch, maize starch, rice starch, modified starch, waxy modified starch; maltodextrin, protein among which pea proteins, rice proteins, soy proteins or other types of proteins; yeast flakes, onion, salt, acidity regulators, iota carrageenan, lambda carrageenan, kappa carrageenan, fruit juice among which apple juice, pear juice, banana juice, mixed fruit juice; soy drink, rice drink, lentil drink, almond drink, coconut oil, seed oil, olive oil.

In step A), by changing the proportions between the ingredients used, it is possible to obtain several varieties of cheese-types with several textures (semiliquid, spreadable, soft, lightly aged, highly aged), with several aromatic varieties, with several chromatic characteristics and having, more or less present, crusts of internal or external edible moulds.

According to a preferred embodiment, the process allows the production of a high-quality product exclusively using powder products (to which only the liquid mixture composed by plant milk, fruit juice and oil will be added). This embodiment allows to further optimize the raw material costs, storage, waste elimination and precision about amounts in dough preparation.
The percentages of components mentioned in step A), and however in the text of the present invention refer to weight-on-weight percentages, where the latter means the total weight of the homogeneous dough obtained at the end of step B).

In step A), ingredients whose minimum amount is 0% w/w, are to be considered as optional, based on the type of result to be obtained.

In step A), the ingredients can be in a wheel as such, i.e. being fresh ingredients, or can be dry ingredients, powder ingredients, dehydrated powder, etc..

According to a preferred embodiment, ingredients of mixture of step A) are powder ingredients. To the mixture thereof, other liquid ingredients are added v in the second part of step A).

According to a preferred embodiment, operating with powder ingredients, the preparation process of plant-based substitute of cheese or other diary products is greatly speeded, furthermore waste are hugely reduced and raw material storage costs are optimized and amount precision in the preparation of ingredients of step A).

According to a preferred embodiment, in step A) first powder solid ingredients are mixed, obtaining a, more or less homogeneous, powder solid mixture, then ingredients are added to the liquid state.

In step A), preferably, powder ingredients are first mixed respecting starch types/proportions suitable for the type of dough (liquid/soft/medium/hard) to be obtained according amounts on the average of 2%-45% w/w of starches, preferably 20% to obtain specific characteristics. Such proportions allows to calibrate starch behaviors both in the starting gelification process (warm step), and during the subsequent crystallization process. In step A) also adding:

Pea, soy, rice proteins or other varieties with the same characteristics in percentages from 0.10% to 15% w/w, preferably 5%.

The mixture of kappa, iota and lambda carrageenan in a percentage from 0.1% to 1.90% w/w,
The plant drink obtained from the mixture between soy, almond, rice, lentils from 20% to 80% w/w, preferably up to 40% depending on the addition of water or not.

The coconut oil in percentages from 15% to 55% w/w, preferably 40%.

Optionally, one or more of the following ingredients are added in step A):

Maltodextrin in percentages from 0% to 2% w/w, preferably 8%. Yeast flakes in a percentage from 0.10% to 8% w/w. The powder onion from 0.05% to 8% w/w, preferably 4%. Salt from 0.50% to 4% w/w. Citric acid from 0.1% to 1.90% w/w. Citric acid from 0.1% to 1.90% w/w. Fruit juice in a percentage from 2% to 25% w/w, preferably 15%. Seeds or olive oil from 10% to 30% w/w, preferably 20%. Seeds of sunflower or flax or the like being chopped - from 0.1% to 10% w/w.

In step A), according to a preferred embodiment, once the powder ingredients are mixed, liquid ingredients are added.

In step B), mixing until obtaining an homogenous compound.

In step C) bain-marie cooking or equivalent method, until achieving a temperature that, depending on percentages and starch yeast varieties used, ranges from 55°C to 90°C. Maintaining at such temperature for a time from 1 minute to 15 minutes or with further tolerance proportionate to the density to be obtained, baking product amount and the evaporation surface of the baking machine.
In step D), the still warm product is poured into the molds or inside synthetic or plant gut casing and, in step E) it is immediately placed into blast chillers at a temperature from - 40°C to +10°C, or up to reaching the suitable temperature to carry out step F), preferably at -20°C, for the time necessary to the product inner cooling (therefore, proportionally to the weight and the shape of any wheel).

According to a preferred alternative embodiment, steps C) and D) can be inverted and modified, first pouring the product still at room temperature or however not completely baked into the moulds or inside synthetic or plant gut casing, preferably even under vacuum and then baking such products.

For the preparation of cheese plant-based substitutes characterized by the presence of mould blooming, the process of the invention, comprises the further steps of F), G and H).

In step F), once the wheel temperature is reduced, they are immersed into a solution or sprayed with a purified water solution to which the powder of mould penicillium candidum and/or Geotrichum Candidum (Penicillium Roqueforti - for marbling) is added, or the like and however characterizing the cheese-type to be obtained; preferably, in the amount from about 1 to about 4 grams per liter.

According to a preferred embodiment, in step F) the aqueous solution comprises from about 1 to about 4 grams of penicillium candidum and/or Geotrichum Candidum mould powder or the like per liter of water.

In the case of cheese plant-based substitutes characterized by the presence of mould blooming inside them, considering that spores cannot be inserted in the dough before the baking because heat will destroy them, it is possible to use one of the two following preferred embodiment:
- in step F) during the immersion or spraying of the aqueous solution comprising moulds, needles are inserted within the cheese wheel which acts as vectors of moulds inside the wheels and allowing the internal flowering thereof. In this way, internal flowering, characterized by a basically filiform structure, will be obtained;
- at the end of the step, after having obtained the complete or partial flowering of the wheels H), the wheels are splitted, preferably manually, into rough pieces and gently pressed into new molds so that the several parts of the already flowered surface can continue the colonization within the new wheel taking advantage of cavities produced by the agglomeration of several pieces within da new wheel / mold. In such case, the inner flowering instead of appearing basically filiform, will be generally characterized by small flowered cavities.

In step G) wheels sprinkled can be placed on a grid in a ventilated environment and controlled with a minimum temperature between 2°C and 10°C and a maximum temperature between 10°C and 22°C depending on the type of product to be obtained and the mould-type used and humidity comprised from 20% to 95%, preferably from 30% to 70%.

In step H) the wheels are daily turned or according to the required regularity through the wheel visual exam such that allowing moulds to uniformly growth until complete mould colonization (about 1 or 2 weeks). Mould colonization means a surface covering provided by the mould.

The results will be a wheel of "plant cheese" perfectly identical in terms of aspect, creaminess and flavor with respect to conventional Camembert, as well as in other variants such as gorgonzola, tomino and any other cheese characterized by outer or inner mould flowering obtainable through this process and this formula.

Therefore, another object is therefore a plant-based substitute of cheese or other diary products obtainable through the above-described process, including the preferred embodiment.

According to a preferred embodiment, a plant-based substitute of cheese or other diary products obtainable through the above-described process is characterized by the presence of mould blooming.

The plant-based substitutes of cheese or other diary products are completely gluten-free, or gluten-free, or with a gluten content comprised between 0.001 ppm and 20 ppm. Ppm means part per million, i.e., for example, 1 ppm means 1 mg per 1 Kg of product; 20 ppm mean, for example, 20 mg per Kg of product; 0.001 ppm means, for example, 1 microgram per Kg of product i.e. a nanogram per gram of product.

Therefore, according to a preferred embodiment, the plant-based substitute of cheese or other diary products obtainable through the above-described process has a gluten-content comprised from 0.001 ppm to 20 ppm.

According to a preferred embodiment, the plant-based substitute of cheese or other diary products obtainable through the above-described process comprises a plant-based composition having a gluten content comprised from 0.001 ppm and 20 ppm, or gluten-free.

According to a more preferred embodiment, the plant-based substitute of cheese or other diary products obtainable through the above-described process is characterized by the presence of mould blooming comprises a plant-based composition having from 0.001 ppm to 20 ppm of gluten.

Therefore, the above-described products, which are cheese plant-based substitutes or of other diary products, are products without gluten, i.e. gluten free.

All the ingredients are widely commercially available.

## Claims

1. Process for the preparation of a plant-based substitute of cheese or other diary products comprising the following steps:
A) preparing in a suitable container a mixture comprising:
- from 2% to 45% w/w of starch,
- from 0.10% to 15% w/w of pea, soybean, rice proteins or the like,
- from 0.10% to 1.90% w/w of kappa, iota and lambda carrageenan mixture,
- from 20% to 80% w/w of plant drink obtained from the mixture of water and soybean, almond, rice, lentils or the like;
- from 15% to 55% w/w of coconut oil,
B) mixing until obtaining an homogeneous mixture;
C) bain-marie cooking or thermally-equivalent method at a temperature comprised between 55°C and 90°C for a time comprised between 1 minute and 15 minutes;
D) pouring the product into one or more mold or inside synthetic or plant gut casing;
E) reducing the temperature until at a temperature comprised between -40°C and 10°C.

2. Process according to claim 1, where the cheese plant-based substitute is **characterized by** the presence of mould blooming, comprising the following further steps:
F) immerging or spraying the product wheel obtained by step E) in or with an aqueous solution comprising purified water and powder of penicillium candidum and/or Geotrichum Candidumo mould or the like and however characterizing the type of cheese to be obtained;
G) Positioning the sprinkled or sprayed wheel of step F) on a grid in a ventilated environment and controlled with a minimum temperature from 2°C to 10°C and a maximum temperature from 10°C to 22°C and humidity from 20% to 95%;
H) turning daily or however regularly the wheel based on dimension and shapes and view-result of the wheels so as to let moulds growing until a uniform mould colonisation.

3. Process according to any one of claims from 1 to 2, wherein in step A) the mixture can comprise one or more of the following further ingredients:
- from 0% to 12% w/w of maltodextrins,
- from 0.10% to 8% w/w of yeast flakes,
- from 0.05% to 8% w/w of powdered onion,
- from 0.50% to 4% w/w of salts,
- from 0.1% to 1.90% w/w of citric acid,
- from 0.1% to 1.90% w/w of lactic acid,
- from 2% to 25% w/w of fruit juice,
- from 10% to 30% w/w of sunflower, flax seeds or the like,
- from 0.1% to 10% w/w of chopped sunflower, flax seeds or the like.

4. Process according to any one of claims from 2 to 3, wherein the cheese plant-based substitute is **characterized by** the presence of mould blooming.

5. Process according to claim 4, wherein the cheese plant-based substitute **characterized by** the presence of mould blooming is of Camembert-type or Brie-type.

6. Process according to any one of claims from 1 to 5, wherein in step A) fist powder solid ingredients are mixed, obtaining a mixture of powder solids, then liquid ingredients are added.

7. Process according to any one of claims from 2 to 6, wherein in step F) the aqueous solution comprises from about 1 to about 4 grams of penicillium candidum and/or Geotrichum Candidum mould powder per liter of water.

8. Plant-based substitute of cheese or other diary products obtainable through the process according to any one of claims from 1 to 7.

9. Plant-based substitute of cheese or other diary products according to claim 8, **characterized by** the presence of mould blooming.

10. Plant-based substitute of cheese or other diary products according to any one of claims from 8 to 9, having a gluten content from 0.001 ppm to 20 ppm.
